(19) Europäisches Patentamt
European Patent Office
Office européen des brevets

(11) EP 0 833 477 A2

(12) **EUROPÄISCHE PATENTANMELDUNG**

(43) Veröffentlichungstag:
01.04.1998 Patentblatt 1998/14

(51) Int. Cl.⁶: **H04L 7/033**

(21) Anmeldenummer: 97116088.2

(22) Anmeldetag: 16.09.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 19.09.1996 DE 19638412

(71) Anmelder:
SIEMENS AKTIENGESELLSCHAFT
80333 München (DE)

(72) Erfinder:
• Wedi, Christoph
46395 Bocholt (DE)

• Thimm, Annemarie
46397 Bocholt (DE)
• Albersmann, Josef
48691 Vreden (DE)
• Detering, Volker
46446 Emmerich (DE)

Bemerkungen:
• Ein Antrag gemäss Regel 88 EPÜ auf
Berichtigung/Hinzufügung der Zeichungen Nr. 1 - 6
liegt vor. Über diesen Antrag wird im Laufe des
Verfahrens vor der Prüfungsabteilung eine
Entscheidung getroffen werden (Richtlinien für die
Prüfung im EPA, A-V, 3.).
• Die Bezugnahmen auf die Zeichnung Nr. 1 bis 6
gelten als gestrichen (Regel 43 EPÜ).

(54) **Verfahren zum Bestimmen einer Abtastphase**

(57) Beschrieben wird ein Verfahren und eine Einrichtung zum Bestimmen einer Abtastphase (APH), mittels der digitale Daten aus einem digitalen Datenstrom (DS) gewonnen werden. Der ein Bitmuster enthaltende Datenstrom (DS) wird je Digitalwert (DB) gemäß einer Überabtastung n-fach abgetastet. Die entstehende Subdaten-Bitfolge (SDBF) wird in einer Registerbank (1401) gespeichert. Die Subdatenbits (SDB) werden in Bitgruppen (DB) von n-Bitstellen unterteilt. Binärwerte mindestens einer übereinstimmenden Bitstelle innerhalb mindestens zweier Bitgruppen (DB) werden auf Übereinstimmung überprüft. Abhängig vom Ergebnis des Vergleichs wird die Abtastphase (APH) festgelegt.

FIG.11

# Beschreibung

Die Erfindung betrifft ein Verfahren zum Bestimmen einer Abtastphase, mittels der digitale Daten aus einem digitalen Datenstrom gewonnen werden. Ferner betrifft die Erfindung eine Einrichtung zum Durchführen des Verfahrens.

Ein solches Verfahren wird z.B. für schnurlose Telekommunikationsgeräte zur leitungsfreien Übertragung von Daten und Sprachinformationen verwendet. Bei schnurloser Telekommunikation im Heimbereich wird häufig eine Übertragung nach dem DECT-Standard (Digital Enhanced Cordless Telecommunication) verwendet. Zum besseren Verständnis der Erfindung vor dem Hintergrund des Standes der Technik wird im folgenden näher auf die Datenübertragung nach dem DECT-Standard eingegangen, die ein wichtiger Anwendungsfall für die vorliegende Erfindung ist.

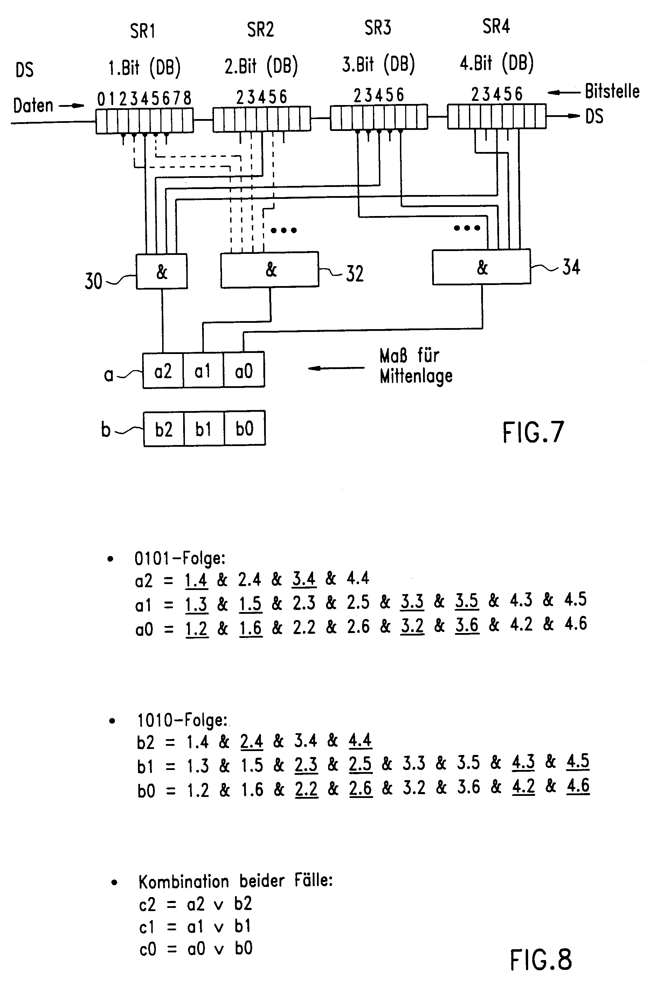

Gemäß diesem DECT-Standard stehen 120 Übertragungskanäle zur Verfügung, wobei Frequenzbänder im Bereich zwischen 1,8 und 1,9 GHz verwendet werden. Innerhalb eines jeden Frequenzbandes erfolgt die Datenübertragung nach dem TDMA-Verfahren (TDMA Time Division Multiple Access), welches einen Zeitmultiplexrahmen von 10 ms hat. Ein solcher Zeitmultiplexrahmen ist in Figur 1 dargestellt. Durch diesen Zeitmultiplexrahmen werden 24 Zeitkanäle (in Figur 1 die Kanäle 0 bis 23) definiert, welcher ein Rahmenschema vorgibt. Dieses Rahmenschema wird so benutzt, daß für jedes Frequenzband zwölf mobile Endstationen, sogenannte Mobilstationen MS, mit einer Basisstation BS gleichzeitig im Duplexbetrieb arbeiten können, d.h. Übertragungen sind möglich von den Stationen MS nach BS und von BS nach MS oder von BS nach MS und von MS nach BS. Den 24 Zeitkanälen wird ein Zeitschlitz von jeweils 417 μs zugeordnet, innerhalb dessen die Daten übertragen werden.

Bei dem genannten TDMA-Verfahren wird zum Beispiel in jedem Zeitschlitz ein Zeitrahmen, auch "Burst" genannt, von 365 μs übertragen, was annähernd einer Rahmenlänge von 420 Bits und einem Datendurchsatz von 42 KBit/s entspricht. Bezogen auf den Zeitmultiplexrahmen ergibt sich unter Berücksichtigung, daß an beiden Enden des Zeitrahmens jeweils 30 Bit als Sicherheitszonen GS (Guard Space GS), z.B. zur Vermeidung von Störüberlappungen mit angrenzenden Zeitschlitzen, vorgesehen sind, eine Bitrate von 1,152 MBit/s.

Die zeitliche Aufeinanderfolge der übertragenen Impulse je Zeitmultiplexrahmen entspricht gemäß Figur 2 einem PH-Kanal, dem sogenannten "Physical channel", welcher nach dem Schichtenmodell für Datenübertragungen der physikalischen Schicht (physical layer) zugeordnet ist. Das übertragene Datenpaket von 420 Bits wird als PH-Paket bezeichnet und enthält ein D-Feld. Von den 420 Datenbits, welche einer Folge von H-L-Bitwerten entspricht (H (High) - hoher Pegelwert; L (Low) - niedriger Pegelwert) werden 32 Bit für die Synchronisation und 388 Bit für die Übertragung von Nutzdaten NI (Net Information) verwendet. Die 32 Bit für die Synchronisation unterteilen sich wiederum in zwei Datenbitfolgen von jeweils 16 Bit. Die erste Datenbitfolge, d.h. die Folge mit den ersten 16 H-L-Werten, ist ein Synchronisations-Einleitungswort SY-EW, das auch als Präambel bezeichnet wird. Durch dieses Synchronisations-Einleitungswort SY-EW wird die Synchronisation eingeleitet. Für die Übertragungsrichtung Mobilstation MS nach Basisstation BS besteht dieses Synchronisations-Einleitungswort SY-EW im Idealfall aus einer L-H-L-H-Bitsequenz entsprechend einer 0101-Bitsequenz. Für die umgekehrte Übertragungsrichtung von Basisstation BS nach Mobilstation MS besteht das Synchronisations-Einleitungswort SY-EW aus einer periodischen H-L-H-L-Bitsequenz bzw. einer 1010-Bitsequenz.

Die Bitfolge mit den zweiten 16 H-L-Bitwerten, die zweite Datenbitfolge, ist ein Synchronisations-Bestatigungswort SY-BW, mit der die mit dem Synchronisations-Einleitungswort SY-EW eingeleitete Synchronisation bestätigt werden muß. Für eine solche Bestätigung muß das Synchronisations-Bestätigungswort SY-BW zumindest zu einem Großteil der Datenbits erkannt werden. Nur dann werden die dem Sync-Feld folgenden Daten akzeptiert. Die Synchronisation ist dann eingeleitet, wenn mit gewisser Wahrscheinlichkeit davon ausgegangen werden kann, daß das Synchronisations-Einleitungswort SY-EW eine L-H-L-H-Bitsequenz bzw. eine H-L-H-L-Bitsequenz ist.

Ein Kommunikationssystem nach dem DECT-Standard umfaßt in der einfachsten Form eine Basisstation und mindestens eine Mobilstation. Komplexere Systeme, z.B. vernetzte Systeme, enthalten mehrere Basisstationen mit jeweils mehreren Mobilstationen. Aufgrund der im DECT-Standard definierten 24 Zeitkanäle können jeder Basisstation bis zu zwölf Mobilstationen zugeordnet werden, die mit der jeweiligen Basisstation im Duplexbetrieb kommunizieren. Für den im DECT-Standard definierten Zeitmulitplexrahmen von 10 ms hat dies zur Folge, daß im Duplexbetrieb alle 5 ms Daten von der Basisstation zu einer Mobilstation oder umgekehrt übertragen werden.

Figur 3 zeigt eine für Kommunikationssysteme nach dem DECT-Standard typische Kommunikationsanordnung KA mit leitungsungebundener Datenübertragung, wobei die Mobilstation MS als Sendegerät SG und die Basisstation BS als Empfangsgerät EG dient. Die Kommunikationsanordnung KA kann auch dahingehend modifiziert sein, daß die Basisstation BS als Sendegerät SG und die Mobilstation MS als Empfangsgerät EG dient. Das Sendegerät SG hat eine Sendeantenne SA, über die ein von dem Sendegerät SG erzeugtes Funksignal FS dem Empfangsgerät EG gesendet wird. Um das Funksignal FS empfangen zu können, hat auch das Empfangsgerät EG eine Empfangsantenne EA.

Wie erwähnt arbeitet das Kommunikationssystem nach dem DECT-Standard mit einem hochfrequenten Trägersignal mit einer Trägerfrequenz zwischen 1,8 und 1,9 GHz, das mit einem in dem Sendegerät SG vorliegenden digitalen Sendedatenstrom SDS mit einem sendegerätespezifischen Takt (auch Phase genannt) moduliert wird. Der in dem Sendegerät SG vorliegende digitale Datenstrom enthält die für die schnurlose Übertragung erforderlichen Informationen. Zu diesen Informationen gehören auch die bereits erwähnten Synchronisations- und Nutzinformationen, die in dem PH-Paket von 420 Bit Datenlänge enthalten sind. Mithilfe dieses PH-Datenpaketes wird nun im Sendegerät SG das modulierte Funksignal FS (Trägersignal) erzeugt und gemäß dem DECT-Standard bei der Datenübertragung in regelmäßigen, durch den Zeitmultiplexrahmen ZMR vorgegebenen Zeitabständen für eine durch den Zeitschlitz vorgegebene Zeitdauer übertragen.

Um die übermittelten Daten, z.B. die je Zeitschlitz TS übertragenen Sprachinformationen, entschlüsseln zu können, muß das Funksignal FS, d.h. das modulierte Trägersignal, im Empfangsgerät EG demoduliert werden. Nach der Demodulation entsteht ein digitaler Empfangsdatenstrom EDS, der bei einer störungsfreien Übertragung des Funksignals FS dasselbe Bitmuster hat, wie der Sendedatenstrom SDS. Dieser störungsfreie Empfangsdatenstrom EDS ist im Block EG rechts dargestellt. Bei einer störungsbehafteten Übertragung des Funksignals FS ergibt sich ein vom Bitmuster des Sendedatenstroms abweichendes Bitmuster, welches im Block EG links dargestellt ist. Nach der Demodulation des Funksignals FS und der Erzeugung des Empfangsdatendstroms EDS muß dieser zur Weiterverarbeitung in dem Endgerät EG auf ein endgerätespezifisches Taktsignal synchronisiert werden. Die Phasenlage des Taktsignals in bezug auf die Datenbits der Empfangsdaten ist dabei von hoher Bedeutung. Gewünscht ist eine Abtastung der empfangenen Daten in der jeweiligen Mitte der Datenbits, denn eine Abtastung außerhalb dieser Bitmitte führt zu einer erhöhten Fehlerrate und verringert die Empfindlichkeit des Empfangsgeräts EG.

Aus der DE 42 36 775 C2 ist ein Verfahren zum Bestimmen der Abtastphase bekannt, mittels der digitale Daten aus einem digitalen Datenstrom gewonnen werden. Die ankommenden Daten werden 9-fach je Digitalwert überabgetastet, so daß für jeden Digitalwert eine Bitgruppe mit neun Bitstellen erzeugt wird. Zur Bestimmung der optimalen Abtastphase, d.h. des Abtastzeitpunktes in der Mitte eines Digitalwertes, wird die Bitfolge am Anfang eines jeden Zeitrahmens (Burst), d.h. die Präambel, ausgewertet. Anhand des bekannten Bitmusters wird die Mitte eines Digitalwertes ermittelt und die zugehörige Abtastphase festgelegt, die für den Rest des Zeitrahmens festgehalten wird. Aus dieser Abtastphase wird ein Taktsignal konstanter Frequenz erzeugt, mit dessen Hilfe die Empfangsdaten bitgenau abgetastet werden und der Empfangsdatenstrom gewonnen wird.

Beim bekannten Verfahren werden die 9-fach überabgetasteten Empfangsdaten in eine Registerbank geladen. Die Binärwerte in dieser Registerbank werden mit einem vorgegebenen Muster verglichen und die jeweilige Bitmitte wird bestimmt. Zum Ende des Bitmusters, d.h. zum Ende der Präambel, wird die beim letzten Digitalwert festgestellte Abtastphase, die zu einer Bitmitte gehört, festgehalten und dann für den Rest des Zeitrahmens beibehalten. Die innerhalb des Bitmusters zuvor festgestellten Bitmitten und die zugehörigen Abtastphasen werden nicht berücksichtigt. Es ist also die Bitmitte eines einzigen Digitalwertes bzw. Datenbits verantwortlich für die Festlegung der Abtastphase und damit für die Erzeugung der digitalen Daten aus dem empfangenen digitalen Datenstrom. Wenn nun gerade dieses Datenbit gestört ist, erhält man beim bekannten Verfahren eine ungenaue Abtastphase, was zu erhöhten Bitfehlerraten innerhalb des betroffenen Zeitrahmens führt.

Es ist Aufgabe der Erfindung, ein Abtastverfahren und eine Abtasteinrichtung anzugeben, bei dem die aus einem digitalen Datenstrom ermittelte Abtastphase mit hoher Genauigkeit in bezug auf die Mitte der ankommenden Datenbits erzeugt wird.

Diese Aufgabe wird für ein Verfahren nach der Erfindung mit den folgenden Schritten gelöst: der ein vorbestimmtes Bitmuster enthaltende digitale Datenstrom mit einer festgelegten Datenrate wird je Digitalwert gemäß einer Überabtastung n-fach abgetastet; die bei der Abtastung entstehende Subdaten-Bitfolge wird in einer seriell arbeitenden Registerbank vorübergehend gespeichert, wobei je Abtastung in Übereinstimmung mit einem Taktimpuls eine Verschiebung der gespeicherten Subdatenbits in der Registerbank um eine Bitstelle erfolgt und das bei der Abtastung erzeugte Suodatenbit in die erste Bitstelle der Registerbank geschrieben wird; die in der Registerbank enthaltenen Suodatenbits werden in Bitgruppen von n-Bitstellen unterteilt; Binärwerte mindestens einer übereinstimmenden Bitstelle innerhalb mindestens zweier Bitgruppen werden miteinander in einem Vergleich auf Übereinstimmung überprüft; abhängig vom Ergebnis des Vergleichs wird die Abtastphase festgelegt.

Bei der Erfindung werden übereinstimmende Bitstellen mindestens zweier Bitgruppen ausgewertet, die seriell in der Registerbank gespeichert sind. Der Vergleich mit einem vorgegebenen Bitmuster als Sollmuster wie bei der DE 42 36 775 C2 entfällt. Die Auswertung mindestens zweier Bitgruppen erhöht die statistische Sicherheit für die Festlegung der Abtastphase. Je größer die Zahl an ausgewerteten Bitgruppen ist, umso größer wird diese statistische Sicherheit. In der Praxis hat sich herausgestellt, daß die Auswertung von vier Bitgruppen und von fünf Bitstellen innerhalb jeder Bitgruppe zu einer gegenüber dem Stand der Technik erhöhten Genauigkeit der Abtastphase führt. Da mehrere Digitalwerte bzw. Datenbits dazu beitragen, daß die Abtastphase auf einen bestimmten Zeitpunkt festgelegt und dann für den Rest des Zeitrahmens beibehalten wird, ist das Risiko, eine ungünstige Abtastphase einzufrieren, erheblich verringert. Die Empfindlichkeit des Empfangsgerätes wird demnach durch das erfindungsgemäße Verfahren deutlich verbessert.

Gemäß einem weiteren Aspekt der Erfindung wird eine Einrichtung zum Bestimmen einer Abtastphase mit den Merkmalen des Anspruchs 12 angegeben. Die mit dieser Einrichtung erzielbaren Vorteile stimmen im wesentlichen mit denen überein, die sich beim Ausführen des genannten Verfahrens einstellen.

Im folgenden wird die Erfindung unter Bezugnahme auf die Zeichnungen, die neben dem bereits bekannten Stand der Technik ein Ausführungsbeispiel der Erfindung zeigen, weiter erläutert. In den Figuren zeigen:

Figur 1 bis 3    Festlegungen der Datenübertragung gemäß dem DECT-Standard sowie die leitungsungebundene Datenübertragung zwischen einem Sendegerät und einem Empfangsgerät,

Figur 4    ein Blockschaltbild mit den wesentlichen Funktionseinheiten eines schnurlos arbeitenden Telekommunikationsgerätes mit einem Empfangsteil und einem Digitalteil,

Figur 5    ein Blockschaltbild mit wichtigen Funktionseinheiten des Digitalteils für die Demodulation eines modulierten Analogsignales und für die Erzeugung einer Abtastphase zur Synchronisation eines digitalen asynchronen Datenstroms auf ein gerätespezifisches Taktsignal,

Figur 6    ein Blockschaltbild der Einrichtung zum Erzeugen einer Abtastphase,

Figur 7    eine Schaltungsanordnung zum Erzeugen eines Datenwortes, anhand dessen ein Erkennungssignal und damit die Abtastphase festgelegt wird,

Figur 8    logische Verknüpfungen in Tabellenform zum Erzeugen des in Figur 7 dargestellten Datenwortes,

Figur 9    einen Zähler zur Ermittlung der Anzahl von Taktimpulsen bei denen der Wert des Datenwortes unverändert ist,

Figur 10    ein Flußdiagramm, welches Verfahrensschritte zur Erkennung des Maximum des Wertes des Datenwortes zeigt, und

Figur 11    eine Schaltungsanordnung zur Festlegung des Erkennungssignals und damit der Abtastphase auf der Grundlage der Anzahl der Taktimpulse für das Maximum.

Die Figuren 1 bis 3 wurden bereits eingangs bei der Erläuterung des Standes der Technik beschrieben. In den nachfolgenden Figuren wird teilweise auf die Darstellung in den Figuren 1 bis 3 bezuggenommen.

Figur 4 zeigt anhand eines Blockschaltbildes den Aufbau eines schnurlosen (leitungsungebundenen) Telekommunikationsgerätes 1, wie es z.B. als Basisstation oder Mobilstation in einem, z.B. nach dem DECT-Standard definierten, Schnurlos-Kommunikationssystem verwendbar ist. Das Telekommunikationsgerät 1 hat neben nicht im einzelnen dargestellten Funktionseinheiten ein Empfangsteil 10 für den Empfang von zur Informationsübertragung modulierten analogen HF-Signalen AS, ein Digitalteil 13 zur Auswertung und Weiterverarbeitung eines aus dem jeweiligen HF-Signal AS demodulierten digitalen Datenstroms DS sowie ein Peripherieteil 18 zur Ausgabe bzw. Weiterleitung der mithilfe des HF-Signals AS und des digitalen Datenstroms DS übertragenen Informationen. Das Empfangsteil 10 des Telekommunikationsgerätes 1 ist mit dem Ausgangsanschluß einer Antenne 11 verbunden. Über eine Funkübertragungsstrecke 2 können die von einer Sendeeinrichtung 3 ausgesendeten HF-Signale AS empfangen werden. Die Signale der Antenne 11 sind einer Empfangseinrichtung 12 zugeführt, die eine Empfangsschaltung 120 und eine Demodulationsschaltung 121 enthält. Die Empfangsschaltung 120 bereitet das von der Antenne 11 empfangene modulierte analoge HF-Signal AS für die Demodulation in der Demodulationsschaltung 121 auf. Bei der Demodulation des HF-Signals AS entsteht am Ausgang der Demodulationsschaltung 121 der digitale Datenstrom DS. Dieser Datenstrom DS wird mit einer Datenrate von 1,152 MBit/s über eine Datenleitung 4 zu einer Steuereinrichtung 14 des Digitalteils 13 übertragen.

Die Demodulationsschaltung 121 ist über eine erste Steuerleitung 5 unmittelbar mit der Steuereinrichtung 14 verbunden. Weiterhin ist die Demodulationsschaltung 121 über eine zweite Steuerleitung 6 und eine Kompensationsschaltung 19 im Empfangsteil 10 mit der Steuereinrichtung 14 verbunden. Die Steuereinrichtung 14, die insbesondere den Empfang des digitalen Datenstroms DS, die Synchronisation des Digitalteils 13 mit dem demodulierten Datenstrom DS und die Vermittlung von Verbindungen gemäß dem TDMA-Verfahren steuert, ist ihrerseits über eine Busschnittstelle 15 mit einem Rechner 16 verbunden. Der Rechner 16 enthält einen Mikroprozessor 160 und einen mit diesem verbundenen digitalen Speicher 161. Der Rechner 16 ist für sämtliche Steuerungs- und Programmierungsabläufe in dem Telekommunikationsgerät 1 verantwortlich. So wird beispielsweise der Steuerbaustein 14 mittelbar über die Busschnittschnelle 15 von der Mikroprozessoranordnung 16 programmiert.

Weiterhin steuert der Rechner 16 eine ADPCM- und CODEC-Schaltung 17, welche Schnittstellenfunktionen zwischen der Steuereinrichtung 14 und dem Peripherieteil 18 übernimmt. Zur Durchführung ihrer Schnittstellenfunktion erhält die Schaltung 17 auch Steuersignale von der Steuereinrichtung 14. Das Peripherieteil 18 enthält Einrichtungen, die den von dem Digitalteil 13 bearbeiteten digitalen Datenstrom DS nach einer D/A-Umwandlung z.B. in akustische Signale umwandelt oder den Datenstrom DS an ein externes analoges Kommunikationsnetz weitergibt.

Figur 5 zeigt in einem Blockschaltbild den prinzipiellen Aufbau des Digitalteils 13 nach Figur 4, insbesondere den Aufbau der Teile, die zur Synchronisation des von dem Empfangsteil 10 empfangenen digitalen Datenstroms DS erforderlich sind. Die Steuereinrichtung 14 enthält einen Abtastphasengenerator 140, dem zur Erzeugung der Abtastphase APH der digitale Datenstrom DS zugeführt ist. Der Abtastphasengenerator 140 ist mit einem Oszillator 141, einer Registriereinrichtung 142 und einer Erkennungsschaltung 143 verbunden, die verrauschte Signale erkennt und diese signalisiert.

Der Oszillator 141 erzeugt ein Taktsignal TSI, dessen Taktfrequenz ein 9-Faches der Frequenz ist, mit der der digitale Datenstrom DS übertragen wird. Das Taktsignal TSI wird außer dem Abtastphasengenerator 140 auch der Registriereinrichtung 142 zugeführt. Zwischen der Registriereinrichtung 142 und dem Abtastphasengenerator 140 werden während der Erzeugung der Abtastphase APH Statusmeldungen SM0 und SM1 ausgetauscht. Weiterhin erhält die Registriereinrichtung 142 eine vom Rechner 16 des Digitalteils 13 erzeugte Statusmeldung SM2 sowie eine von der Erkennungsschaltung 143 generierte Statusmeldung SM3. Aus den Statusmeldungen SM0, SM2 und SM3 sowie dem Taktsignal TSI erzeugt die Registriereinrichtung die Statusmeldung SM1, welche dem Abtastphasengenerator 140 zugeführt wird. Die Statusmeldungen SM0 bis SM3, deren Funktion im Zusammenhang mit dem Aufbau der in Figur 6 dargestellten Steuereinrichtung 14 noch beschrieben wird, sind dynamische, sich zeitlich ändernde Zustandsmeldungen der in der Steuereinrichtung 14 für die Erzeugung der Abtastphase APH angeordneten Baugruppen 140, 142, 143.

Mit dem Erhalt der letzten Statusmeldung SM1 erzeugt der Abtastphasengenerator 140 aus dem digitalen Datenstrom DS und dem Taktsignal TSI die endgültige Abtastphase APH, die dann neben dem digitalen Datenstrom DS zur Synchronisation einer Synchronisationsanordnung 144 zugeführt wird. Diese Synchronisationsanordnung 144 erzeugt aus dem digitalen Datenstrom DS und der Abtastphase APH einen synchronisierten digitalen Datenstrom SY-DS, der dann in der Steuereinrichtung 14 des Telekommunikationsgerätes 1 weiterverarbeitet wird. Die von dem Abtastphasengenerator 140 erzeugte Abtastphase APH wird jedoch nicht nur der Synchronisationsanordnung 144, sondern auch der Registriereinrichtung 142 zugeführt. Zusammen mit dem der Registriereinrichtung 142 ebenfalls zugeführten Datenstrom DS erzeugt diese Registriereinrichtung 142 das Steuersignal STS, das über die Steuerleitung 5 nach Figur 4 der Demodulationsschaltung 121 und über die Steuerleitung 6 nach Figur 4 der Kompensationsschaltung 19 des Empfangsteiles 10 zugeführt wird.

Figur 6 zeigt in einem Blockschaltbild schematisch den Aufbau einer Einrichtung zur Abtastphasengenerierung, die den Abtastphasengenerator 140, den Oszillator 141, die Registriereinrichtung 142 und die Erkennungsschaltung 143 enthält (vgl. Figur 5). Der Abtastphasengenerator 140 enthält eine Unterdrückungsschaltung 1400, eine Registerbank 1401, eine über eine Bus-Schnittstelleneinrichtung 1402 mit der Registerbank 1401 verbundene Bitsequenz-Erkennungsschaltung 1403 und eine Selektionsschaltung 1404. Der Abtastphasengenerator 140 dient dazu, zusammen mit der Registrierungseinrichtung 142 und der Erkennungsschaltung 143 aus dem digitalen Datenstrom DS innerhalb einer Zeitspanne, die durch das Synchronisations-Einrichtungswort SY-EW (Präambel) nach den Figuren 2 und 3 definiert ist, die Abtastphase APH für eine Synchronisation in bezug auf den Datenstrom DS zu erzeugen.

Der Datenstrom DS wird zunächst der Unterdrückungsschaltung 1400 zugeführt. Diese Unterdrückungsschaltung 1400 arbeitet nach dem Schieberegisterprinzip, d.h. zum Durchschieben des Datenstroms DS muß ein Taktsignal angelegt werden. Im vorliegenden Fall wird das vom Oszillator 141 erzeugte Taktsignal TSI mit einer n-fachen Taktfrequenz TFn auf die Unterdrückungsschaltung 1400 gegeben. Durch dieses Taktsignal TSI wird der digitale Datenstrom DS bitweise mit einer Abtastrate entsprechend der Taktfrequenz TFn abgetastet. Jedes einzelne Datenbit DB des digitalen Datenstroms DS wird somit in eine Serie von Suodatenbits SDB zerlegt und sodann auf Fehler untersucht. Mehrere aufeinanderfolgende Datenbits DB ergeben mehrere Serien von Subdatenbits SDB; diese Serien werden im folgenden als Subdatenbitfolge SDBF bezeichnet.

Die Genauigkeit, mit der die Abtastphase APH festgelegt werden kann, steigt mit der Anzahl der Subdatenbits SDB je Datenbit DB an. Da im vorliegenden Fall eine 9-fache Abtastung des digitalen Datenstroms DS erfolgt, muß bei einer Übertragungsgeschwindigkeit von 1,152 MBit/s des digitalen Datenstroms DS das Taktsignal TSI eine Taktfrequenz TFn mit n = 9 von 10,368 MHz haben.

In der Unterdrückungsschaltung 1400 werden je Datenbit DB des Datenstroms DS neun Subdatenbits SDB als Abtastwerte erzeugt. Die Aufgabe der Unterdrückungsschaltung 1400 ist es, eine festgestellte und z.B. durch Rauschen hervorgerufene inhomogene H-L-H-Bitsubsequenz bzw. eine L-H-L-Bitsubsequenz der Subdatenbitfolge SDBF zu erkennen und zu unterdrükken. Dadurch wird sichergestellt, daß der der Unterdrückungsschaltung 1400 nachgeschalteten Registerbank 1401 nur solche Datenbits DB des digitalen Datenstroms DS zugeführt werden, bei denen eine Subdatenbitfolge SDBF ohne eine inhomogene "H-L-H"-Bitsubsequenz bzw. "L-H-L"-Bitsubsequenz vorliegt.

Die Registerbank 1401 enthält im vorliegenden Fall vier Schieberegister SR1 bis SR4, die in einer Kettenschaltung angeordnet sind. Jedes dieser vier Schieberegister SR1 bis SR4 wird zum Durchtakten des digitalen Datenstroms DS durch die Registerbank 1401 mit dem Taktsignal TSI mit einer Taktfrequenz von TFn versorgt, wobei n = 9 ist.

Jedes Schieberegister SR1 bis SR4 speichert ein Datenbit DB des Datenstroms DS. Daraus folgt, daß bei der Abtastung der Datenbits DB insgesamt 36 Subdatenbits SDB als Subdatenbitfolge SDBF in der Registerbank 1401 zwischengespeichert sind. Mit jedem Takt des Taktsignals TSI verändert sich die in den Schieberegistern SR1 bis SR4 zwischengespeicherten Subdatenbits SDB. Nach 36 aufeinanderfolgenden Takten des Taktsignals TSI ist das in der nullten Bitstelle des Schieberegisters SR1 zwischengespeicherte Subdatenbit in die letzte Bitstelle des Schieberegisters SR4 durchgeschoben. Die in der Registerbank 1401 zu jedem Taktzeitpunkt zwischengespeicherte Subdatenbitfolge SDBF wird über die Bus-Schnittstelleneinrichtung 1402 an die Bitsequenz-Erkennungsschaltung 1403, an die Erkennungsschaltung 143 und an eine Bitgleichheit-Erkennungsschaltung 1420 der Registrierungseinrichtung 142 übergeben. Die Bitsequenz-Erkennungsschaltung 1403 hat die Aufgabe, die 0101- bzw. die 1010-Bitfolge der Präambel des Datenstroms DS zu erkennen und den Zeitpunkt zu ermitteln, zu dem das jeweilige Bit seine Bitmitte erreicht hat. Diese Bitmitte legt dann den Abtastzeitpunkt für die nachfolgenden Bits fest. Im folgenden wird das hierfür verwendete Verfahren näher erläutert.

In der Figur 7 ist schematisch dargestellt, wie die in den einzelnen Schieberegistersn SR1 bis SR4 enthaltenen Binärwerte miteinander verknüpft werden. In einem ersten UND-Glied 30 werden die Binärwerte der jeweils vierten Bitstelle der in den Schieberegistern SR1 bis SR4 gespeicherten Bitgruppen (1. Bit bis 4. Bit) miteinander verknüpft. Zu beachten ist, daß die Binärwerte der verschiedenen Bitgruppen abwechselnd negiert werden, um die Folge von 1010-Werten bzw. 0101-Werten richtig auswerten zu können. Die vierte Bitstelle ist in dem jeweiligen Schieberegister SR4 bis SR1 die mittlere Bitstelle. In einem zweiten UND-Glied 32 werden die Binärwerte der jeweils dritten und fünften Bitstelle der vier Schieberegister SR1 bis SR4 verknüpft, d.h. die der mittleren Bitstelle benachbarten Bitstellen. Schließlich erfolgt eine weitere Verknüpfung im UND-Glied 34, wobei die Binärwerte der jeweils zweiten und sechsten Bitstelle der Schieberegister SR1 bis SR4 verknüpft werden. Bei den UND-Gliedern 32 und 34 ist aus Übersichtsgründen die Leitungsführung nicht vollständig dargestellt. Die Ergebnisse der UND-Glieder 30, 32 und 34 werden zu einem Datenwort a verknüpft, welches die Bitstellen $a_2$, $a_1$ und $a_0$ hat. Das Datenwort a kann als Binärzahl interpretiert werden, d.h. als $a2^2 + a1^1 + a0^0$ mit der Basis 2.

Wie erwähnt werden bei dem DECT-Standard als Präambel zwei Fälle unterschieden, nämlich ein Bitmuster mit einer L-H-L-H-Bitsequenz (0101-Bitsequenz) oder eine H-L-H-L-Bitsequenz (1010-Bitsequenz). Demgemäß ergibt sich für eine 0101-Bitsequenz das Datenwort a mit den Koeffizienten $a_2$, $a_1$ und $a_0$; für eine 1010-Bitsequenz ergibt sich ein Datenwort b mit den Koeffizienten $b_2$, $b_1$ und $b_0$.

In der Figur 8 sind tabellarisch die Ergebnisse für die logischen Verknüpfungen für beide Bitsequenzen dargestellt. Eine Unterstreichung zeigt an, daß der jeweilige Binärwert in der Bitstelle invertiert verarbeitet wird; die Ziffer vor dem Punkt bezieht sich auf die jeweilige Bitgruppe, die Ziffer nach dem Punkt bezieht sich auf die jeweilige Bitstelle. Die Darstellung 1.4&2.4 hat also die Bedeutung, daß der negierte Binärwert der vierten Bitstelle der ersten Bitgruppe mit dem nicht negierten Binärwert der vierten Bitstelle der zweiten Bitgruppe einer UND-Verknüpfung unterzogen werden.

Wie in Figur 8 unten dargestellt ist, erfolgt eine weitere ODER-Verknüpfung der jeweiligen Koeffizienten der Datenwörter a und b, so daß man als Ergebnis das Datenwort c mit den Koeffizienten $c_2$, $c_1$ und $c_0$ erhält, wobei das Datenwort c als $c2^2 + c1^1 + c0^0$ zur Basis 2 interpretiert wird. Der höchste Wert des Datenworts c ist somit in Binärschreibweise 111 und in Dezimalschreibweise 7; sein niedrigster Wert ist 000 bzw. dezimal 0. Die Datenwörter a, b bzw. c stellen ein Maß für die Übereinstimmung der jeweiligen Binärwerte in den Schieberegistern SR1 bis SR4 dar. Wenn die Subdatenbits mit der Taktfrequenz TFn durch die Schieberegister SR1 bis SR4 hindurchgeschoben werden, wird das Datenwort c während der Präambel normalerweise zwischen binär 000, d.h. dezimal 0, und binär 111, d.h. dezimal 7, schwanken und dazwischen auch die Werte binär 100, d.h. dezimal 4, und 110, d.h. dezimal 6, annehmen. Für den genannten Fall "binär 000" liegen die Übergänge der Datenbits DB jeweils in der Mitte der Schieberegister SR1 bis SR4; der Fall "binär 111" liegt dann vor, wenn die Mitten der Datenbits DB mit der mittleren Bitstelle der jeweiligen Bitgruppen übereinstimmen, d.h. der vierten Bitstelle in den Schieberegistern SR1 bis SR4 gemäß Figur 7. Der Fall, daß die Datenworte a, b bzw. c den Maximalwert binär 111 haben, kann bei der in Figur 7 gezeigten Auswertung für maximal fünf aufeinanderfolgende Takte vorkommen. Die Mitte der Datenbits liegt dann beim mittleren Takt unter denjenigen Takten, für die der Maximalwert detektiert worden ist.

Es kann vorkommen, daß bei stark gestörten Datenbits DB mit nicht symmetrischem Puls-Pause-Verhältnis der Maximalwert binär 111 nicht erreicht wird. Es stellt sich jedoch ein relatives Maximum ein, beispielsweise ein Wert für die Datenwörter a, b bzw. c von 110 (dezimal 6) oder 100 (dezimal 4). Auch für dieses relative Maximum gilt, daß der mittlere Takt unter denjenigen Takten, für die dieses relative Maximum detektiert worden ist, die Mitte der in Figur 7 dargestellten Datenbits DB angibt. Auf diese Weise kann also gemäß der Erfindung die Mitte eines Datenbits DB genau detektiert werden, selbst wenn die Datenbits DB gestört sind. Da bei der Auswertung gemäß dem Beispiel nach Figur 7 vier Bitgruppen, d.h. vier Datenbits DB, ausgewertet werden, ergibt sich eine hohe statistische Sicherheit beim Erkennen der Datenbitmitte.

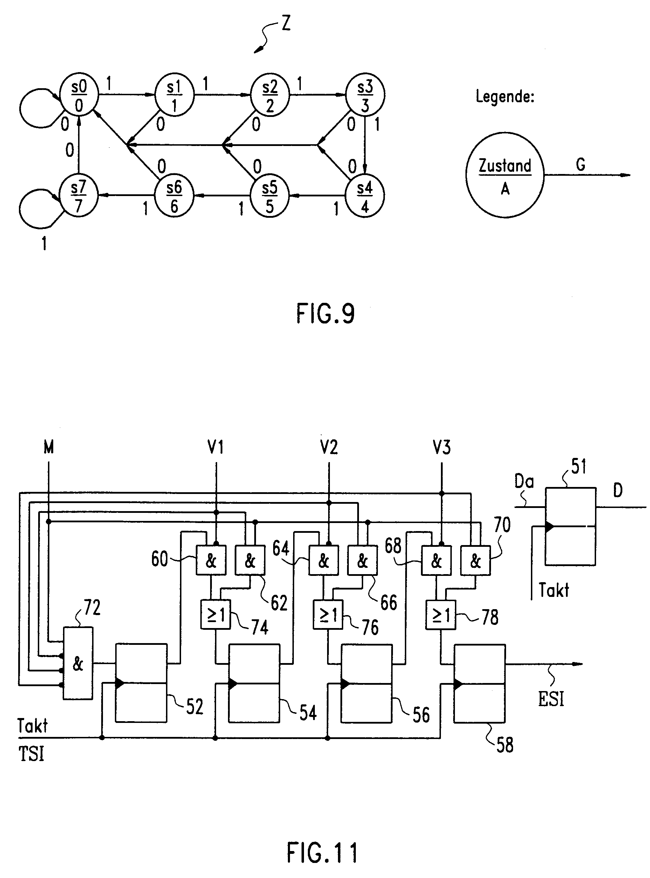

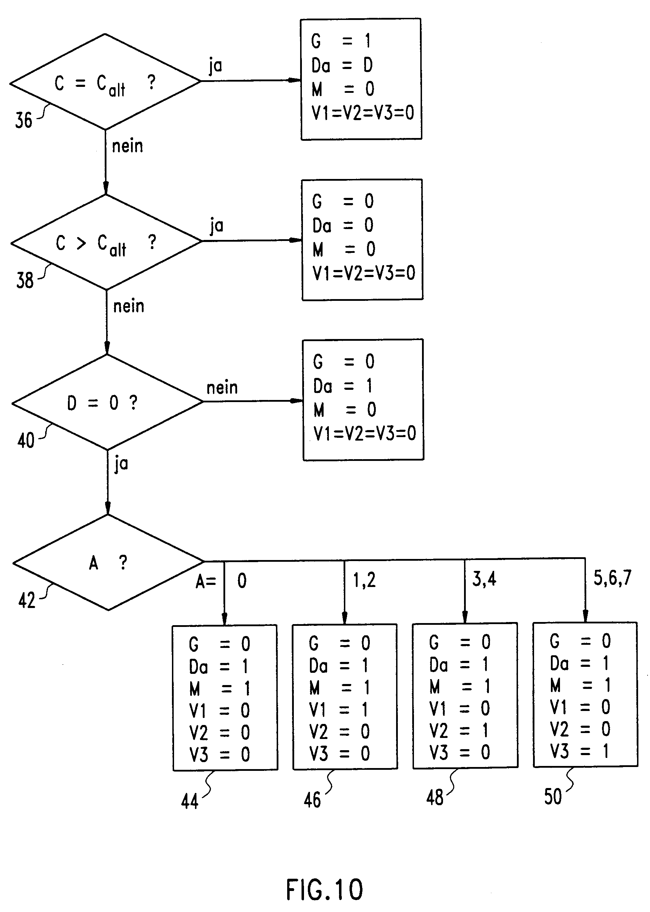

Um festzustellen, ob das Datenwort c einen maximalen Wert angenommen hat, wird das aktuelle Datenwort c mit dem einen Takt vorher ermittelten Datenwort $c_{alt}$ verglichen. Praktisch gesehen wird das Datenwort $c_{alt}$ um einen Takt festgehalten, so daß es beim aktuellen Takt noch zur Auswertung zur Verfügung steht. Wenn der Wert des aktuellen Datenworts c zum ersten mal kleiner ist als der des Datenwortes $c_{alt}$, so wird definitionsgemäß ein Maximum unterschritten. Da dieses Maximum üblicherweise für mehrere Takte ansteht, ist zunächst die Breite des Maximums, d.h. die Anzahl der Takte zu ermitteln, für die dieses Maximum detektiert worden ist. Zum Ermitteln der Anzahl der Takte, für die der Maximalwert vorhanden war, wird ein Zähler Z verwendet, der die Takte für den Zustand c = $c_{alt}$ zählt. In Abbildung 9 ist der Zähler Z als Moore-Automat dargestellt. Gemäß Legende ist das Ausgangssignal A eine Größe, welches angibt, für wieviele Takte der Wert des Datenworts c konstant geblieben ist. Das Eingangssignal G, aufgrund dessen sich ein neuer Zustand s0 bis s7 einstellt, wird gemäß den Ablaufschritten nach Figur 10 erzeugt.

Figur 10 zeigt ein Ablaufschema, bei dessen Abarbeitung die bereits erwähnte Variable G erzeugt wird, welche beim Zähler nach Figur 9 als Eingangsgröße benötigt wird. Weiterhin werden die folgenden binären Größen festgelegt: Da und D, welche als Eingangssignal und Ausgangssignal für ein flankengetriggertes Flip-Flop gemäß Figur 11 verwendet werden; die Größe M, welche als ein Eingangssignal für die Schaltungsanordnung nach Figur 11 verwendet wird und anzeigt, daß ein Maximum festgestellt worden ist; außerdem die binären Größen V1, V2 und V3, welche ebenfalls in der Schaltungsanordnung nach Figur 11 verwendet werden und eine Verschiebung um einen oder mehrere Takte bewirken, wie im Zusammenhang mit Figur 11 noch erläutert wird.

Beim Ablaufschema nach Figur 10 wird im ersten Schritt 36 festgestellt, ob der aktuelle Wert des Datenwortes c mit dem vorherigen Wert des Datenwortes $c_{alt}$ übereinstimmt. Wenn dies der Fall ist, so wird die Variable G auf 1 gesetzt, die weiteren Variablen D, M, V1 bis V3 werden auf 0 gesetzt. Das Setzen der Variablen G auf 1 bewirkt, daß der Zähler Z nach Figur 9 um 1 hochgezählt wird, sein Ausgangssignal A also um 1 erhöht wird. Wenn im Schritt 36 keine Übereinstimmung festgestellt worden ist, so wird im nachfolgenden Schritt 38 überprüft, ob der aktuelle Wert des Datenwortes c größer als der vorherige Wert $c_{alt}$ ist. Wenn dies zutrifft, so wird die Variable G auf 0 gesetzt, was bedeutet, daß der Zähler Z nach Figur 9 zurückgesetzt wird und den Zustand s0 annimmt. Die weiteren Größen werden auf 0 gesetzt. Wenn im Schritt 38 ein negatives Ergebnis festgestellt wird, d.h. der aktuelle Wert des Datenwortes c ist kleiner als der vorherige Wert $c_{alt}$ -das Maximum des Wertes wurde also unterschritten - so wird im nachfolgenden Schritt 40 überprüft, welchen Wert die Variable D hat. Wenn die Variable D den Wert 1 hat, so wird die Variable G auf 0, die Größe Da auf 1 und die weiteren Größen auf 0 gesetzt.

Ist das Prüfergebnis im Schritt 40 positiv, so werden abhängig vom aktuellen Zählerstand nach Figur 9 die verschiedene Größen festgelegt. Beim Zählerstand A = 0 werden die Variablen Da und M auf 1 gesetzt; die weiteren Variablen G, V1, V2, V3 werden auf 0 gesetzt. Bei einem Zählerstand A gleich 1 oder 2 wird zusätzlich die Variable V1 auf 1 gesetzt. Beim Zählerstand A gleich 3 oder 4 wird die Variable V2 auf 1 gesetzt, und beim Zahlerstand A gleich 5, 6 oder 7 wird die Variable V3 auf 1 gesetzt.

Figur 11 zeigt eine Schaltungsanordnung zum Erzeugen eines Erkennungssignals ESI, das um eine vorgegebene Zahl von Takten, die durch die Variablen V1, V2, V3 definiert sind, gegen einen Maximumimpuls verschoben ist, der durch die Variable M mit Wert 1 definiert ist. Die Schaltungsanordnung enthält vier hintereinander geschaltete Flip-Flops 52 bis 58, die durch den Taktimpuls TSI angesteuert werden. Ferner enthält die Schaltungsanordnung UND-Glieder 60 bis 70, ein Eingangs- UND-Glied 72 sowie ODER-Glieder 74 bis 78. Die genannten Verknüpfungelemente haben invertierende Eingänge, die in der Figur 11 durch einen Punkt gekennzeichnet sind. Im Bildteil rechts oben der Figur 11 ist ein Flip-Flop 51 dargestellt, das zur Verzögerung der Variablen Da um einen Takt dient, d.h. die Ausgangs-Variable D nimmt nach einen Taktimpuls den Wert der Variablen Da an.

Die Funktionsweise der Schaltungsanordnung nach Figur 11 ist wie folgt. Die bei der Ablaufsteuerung nach Figur 10 festgelegten Variablen M, V1, V2, V3, Da und D werden als Rechteckimpulse interpretiert, wobei je nach verwendeter Schaltlogik dem Wert 0 einer Variablen ein L-Wert und dem Wert 1 ein H-Wert oder umgekehrt zugeordnet ist. Zunächst soll der Fall betrachtet werden, daß die Variablen gemaß dem Block 44 in Figur 10 definiert sind, d.h. für einen Zahlerstand A gleich 0. Nachdem die Variablen V1, V2, V3 den Wert 0 haben und M gleich 1 ist, erzeugt das Eingangs-UND-Glied 72 eine logische 1 an seinem Ausgang. Das Flip-Flop 52 wird im nächsten Takt an seinem Ausgang also ebenfalls eine logische 1 erzeugen, woraufhin das UND-Glied 60 an seinem Ausgang eine logische 1 erzeugt und über das ODER-Glied 74 der Eingang des Flip-Flops 54 auf logisch 1 gesetzt ist. Beim nächsten Takt wird in ähnlicher Weise der Eingang des Flip-Flops 56 auf logisch 1 gesetzt, und beim übernächsten Takt der Eingang des Flip-Flops 80. Beim darauffolgenden Takt erscheint am Ausgang des Flip-Flops 58 eine logische 1, d.h. das Erkennungssignal ESI wird auf logisch 1 gesetzt. Es ist also festzustellen, daß der Zustandswechsel von logisch 0 nach 1 des Erkennungssignals ESI um vier Takte gegenüber dem Erscheinen einer logischen 1 bei der Variablen M verschoben ist. Da die Variable M angibt, daß ein Maximum erkannt worden ist, ist das Erkennungssignal ESI gegenüber dieser Maximumerkennung um vier Takte verzögert.

Für den Fall, daß der Zählerstand A gleich 1 oder 2 ist, d.h. das Maximum stand für zwei oder drei Takte an, werden die Variablen gemäß dem Block 46 gesetzt. Die Variable V1 hat demgemäß eine logische 1, mit der Folge, daß das Eingangs- UND-Glied 72 gesperrt ist. Am Eingang des UND-Glieds 62 liegen jedoch die Variablen V1 und M mit jeweils logisch 1 an, und der Eingang des Flip-Flops 64 wird gesetzt. Nach Ablauf von drei Takten des Taktsignals TSI erscheint am Ausgang des Flip-Flops 58 als Erkennungssignal ESI eine logische 1. Das Erkennungssignal ESI ist also gegenüber dem Setzen der Variablen M auf logisch 1 um drei Takte verschoben.

In ähnlicher Weise ergibt sich eine Verschiebung um zwei Takte, wenn die Variable V2 auf logisch 1 gesetzt wird, d.h. die Variablen sind gemäß dem Block 48 in Figur 9 definiert, was dem Zählerstand A gleich 3 oder 4 zugeordnet ist. Bei einem Zählerstand A gleich 5, 6 oder 7 sind die Variablen gemäß dem Block 50 definiert, d.h. die Variable V3 hat den Wert logisch 1. Es ergibt sich eine Verzögerung zwischen dem Erscheinen der Variablen M als logisch 1 und dem Ausgangssignal des Flip-Flops 58, dem Erkennungssignal ESI, um einen Takt des Taktsignals TSI. Die auf diese Weise an die jeweilige Breite des Maximums angepaßte Verzögerung der Variablen M führt dazu, daß aus dem Erkennungssignal ESI die durchschnittliche Mitte der in der Registerbank 1401 gespeicherten Datenbits der Präambel des Datenstroms DS und damit ein optimaler Abtastzeitpunkt, nämlich die Abtastphase APH ermittelt werden kann.

Zur Korrektur der Abtastphase APH wird die Selektionsschaltung 1404 gemäß Figur 6 verwendet. Sie ist beispielsweise als Zähler ausgebildet, der vom Oszillator 141 mit Taktimpulsen angesteuert wird und der durch das Erkennungssignal ESI jeweils auf die Bitmitte der einzelnen Datenbits zurückgesetzt wird.

Mit der Abgabe des Erkennungssignals ESI gibt die Bitsequenz-Erkennungsschaltung 1403 an eine Zähleinrichtung 1421 der Registriereinrichtung 142 die Statusmeldung SM0 ab. Mit dieser Statusmeldung SM0 wird der Zähleinrichtung 1421 mitgeteilt, daß die erste 0101- bzw. 1010-Bitfolge erkannt worden ist. Die Zähleinrichtung 1421, die ebenfalls von dem Oszillator 141 getaktet wird, zählt die Anzahl der ihr übermittelten Statusmeldungen SM0.

Ist die vorstehend beschriebene Prozedur m-mal durchlaufen worden, wobei m generell kleiner als n ist (z.B. m=3), dann wartet die Zähleinrichtung 1421 auf ein Zusatzsignal ZS von der Bitgleichheit-Erkennungsschaltung 1420 und wertet die Statusmeldungen SM3, SM2 der Erkennungsschaltung 143 und der Mikroprozessoranordnung 16 aus. In Abhängigkeit von den Statusmeldungen SM2, SM3 bzw. dem Zusatzsignal ZS gibt die Zähleinrichtung 1421 über ein ODER-Gatter 1422 die Statusmeldung SM1 an die Selektionsschaltung 1404 ab.

Mit dieser Statusmeldung SM1 wird das weitere Zurücksetzen der Selektionsschaltung 1404 verhindert, wodurch die Abtastphase APH durch das letztmalige Zuführen des Erkennungssignals ESI generiert ist. Mit der Übertragung des Zusatzsignals ZS wird der Zähleinrichtung 1421 von der Bitgleichheit-Erkennungsschaltung 1420 mitgeteilt, daß das Sync-Einleitungswort SY-EW zu Ende ist und das Sync-Bestätigungswort SY-BW anfängt. Zu diesem Zeitpunkt sollte die Abtastphase APH für die Synchronisation generiert sein.

Durch die Statusmeldung SM3 wird die Zählereinrichtung 1421, für den Fall, daß ein "verrauschter" Ist-Datenstrom I-DS bzw. Datenstrom DS erkannt wurde, zurückgesetzt. Mit der Statusmeldung SM2 wird der Zähleinrichtung 1421 mitgeteilt, ob das Sync-Betätigungswort SY-BW erkannt wurde, also ein DECT-spezifischer Zeitschlitz TS vorliegt.

## Patentansprüche

1. Verfahren zum Bestimmen einer Abtastphase (APH), mittels der digitale Daten aus einem digitalen Datenstrom (DS) gewonnen werden, mit den folgenden Schritten:

   der ein vorbestimmtes Bitmuster enthaltende digitale Datenstrom (DS) mit einer festgelegten Datenrate wird je Digitalwert (DB) gemäß einer Überabtastung n-fach abgetastet,

   die bei der Abtastung entstehende Subdaten-Bitfolge (SDBF) wird in einer seriell arbeitenden Registerbank (1401) vorübergehend gespeichert, wobei je Abtastung in Übereinstimmung mit einem Taktimpuls (TSI) eine Verschiebung der gespeicherten Subdatenbits (SDB) in der Registerbank (1401) um eine Bitstelle erfolgt und das bei der Abtastung erzeugte Suodatenbit (SDB) in die erste Bitstelle der Registerbank (1401) geschrieben wird,

die in der Registerbank (1401) enthaltenen Subdatenbits (SDB) werden in Bitgruppen (DB) von n-Bitstellen unterteilt,

Binärwerte mindestens einer übereinstimmenden Bitstelle innerhalb mindestens zweier Bitgruppen (DB) werden miteinander in einem Vergleich auf Übereinstimmung überprüft,

abhängig vom Ergebnis des Vergleichs wird die Abtastphase (APH) festgelegt.

2. Verfahren nach Anspruch 1, **dadurch gekennzeichnet,** daß das Bitmuster eine L-H-L-H-Bitsequenz oder eine H-L-H-L-Bitsequenz ist.

3. Verfahren nach Anspruch 1 oder 2, dadurch **gekennzeichnet**, daß bei der Überabtastung n=9 ist.

4. Verfahren nach einem der vorhergehenden Ansprüche, dadurch **gekennzeichnet**, daß beim Vergleich der Binärwerte übereinstimmende Bitstellen von vier aufeinander folgenden Bitgruppen (DB) verwendet werden.

5. Verfahren nach einem der vorhergehenden Ansprüche, dadurch **gekennzeichnet**, daß zum Vergleich die Binärwerte einer logischen UND-Verknüpfung unterzogen werden, wobei die Binärwerte aufeinander folgender Bitgruppen (DB) abwechseln negiert werden.

6. Verfahren nach einem der vorhergehenden Ansprüche, dadurch **gekennzeichnet,** daß als übereinstimmende Bitstelle die mittlere Bitstelle (4. Bitstelle) einer jeden Bitgruppe (DB) verwendet wird.

7. Verfahren nach Anspruch 6, dadurch **gekennzeichnet,** daß die Binärwerte der der mittleren Bitstelle benachbarten beiden Bitstellen (3. und 5. Bitstelle) der Bitgruppen (DB) einer zweiten UND-Verknüpfung unterzogen werden, und daß die Abtastphase (APH) abhängig vom Ergebnis der ersten UND-Verknüpfung und der zweiten UND-Verknüpfung festgelegt wird.

8. Verfahren nach Anspruch 7, dadurch **gekennzeichnet,** daß die Binärwerte der an die benachbarten Bitstellen angrenzenden Bitstellen (2. und 6. Bitstelle) der Bitgruppen (DB) einer dritten UND-Verknüpfung unterzogen werden, und daß die Abtastphase (APH) abhängig vom Ergebnis der ersten UND-Verknüpfung, der zweiten UND-Verknüpfung und der dritten UND-Verknüpfung festgelegt wird.

9. Verfahren nach einem der vorhergehenden Ansprüche, dadurch **gekennzeichnet**, daß die Zahl übereinstimmender nicht negierter Binärwerte und negierter Binärwerte je Taktimpuls (TSI) festgestellt wird, daß die Anzahl der Taktimpulse (TSI) ermittelt wird, für die die Zahl gleich bleibt, und daß die Abtastphase (APH) abhängig von dieser Anzahl festgelegt wird.

10. Verfahren nach Anspruch 9, dadurch **gekennzeichnet**, daß die Abtastphase (APH) so festgelegt ist, daß sie im wesentlichen mit dem Taktimpuls übereinstimmt, der durch die halbe Anzahl definiert ist.

11. Verfahren nach einem der vorhergehenden Ansprüche, dadurch **gekennzeichnet**, daß es für schnurlose Telekommunikationsgeräte verwendet wird, die nach dem DECT-Standard arbeiten.

12. Einrichtung zum Durchführen des Verfahrens zum Bestimmen einer Abtastphase nach einem der vorhergehenden Ansprüche, mit einer Abtasteinrichtung, die einen ein vorbestimmtes Bitmuster enthaltenden digitalen Datenstrom (DS) mit einer festgelegten Datenrate je Digitalwert gemäß einer Überabtastung n-fach abtastet, einer Registerbank (1401), die die bei der Abtastung entstehende Subdaten-Bitfolge (SDBF) seriell vorübergehend speichert, wobei je Abtastung in Übereinstimmung mit einem Taktimpuls (TSI) eine Verschiebung der gespeicherten Subdatenbits in der Registerbank um eine Bitstelle erfolgt und das bei der Abtastung erzeugte Subdatenbit (SDB) in die erste Bitstelle der Registerbank (1401) geschrieben wird, wobei die in der Registerbank (1401) enthaltenen Subdatenbits (SDB) in Bitgruppen (DB) von n-Bitstellen unterteilt werden, **gekennzeichnet** durch eine Verknüpfungsschaltung, die Binärwerte mindestens einer übereinstimmenden Bitstelle innerhalb mindestens zweier Bitgruppen (DB) miteinander verknüpft und in einem Vergleich auf Übereinstimmung überprüft, wobei abhängig vom Ergebnis des Vergleichs die Abtastphase (APH) festgelegt wird.

13. Einrichtung nach Anspruch 12, dadurch **gekennzeichnet**, daß das Bitmuster eine L-H-L-H-Bitsequenz oder eine H-L-H-L-Bitsequenz ist.

14. Einrichtung nach Anspruch 12 oder 13, dadurch **gekennzeichnet**, daß zum Vergleich die Binärwerte einer logischen UND-Verknüpfung unterzogen werden, wobei die Binärwerte aufeinander folgender Bitgruppen (DB) abwechselnd negiert werden.

15. Einrichtung nach einem der vorhergehenden Ansprüche, dadurch **gekennzeichnet**, daß als übereinstimmende Bitstelle die mittlere Bitstelle (4. Bitstelle) einer jeden Bitgruppe (DB) verwendet wird.

16. Einrichtung nach Anspruch 15, dadurch **gekennzeichnet**, daß die Binärwerte der der mittleren Bitstelle benachbarten beiden Bitstellen der Bitgruppen (DB) einer zweiten UND-Verknüpfung unterzogen werden, und daß die Abtastphase (APH) abhängig vom Ergebnis der ersten UND-Verknüpfung und der zweiten UND-Verknüpfung festgelegt wird.

17. Einrichtung nach Anspruch 16, dadurch **gekennzeichnet**, daß die Binärwerte der an die benachbarten Bitstellen angrenzenden Bitstellen der Bitgruppen einer dritten UND-Verknüpfung unterzogen werden, und daß die Abtastphase (APH)-abhängig vom Ergebnis der ersten UND-Verknüpfung, der zweiten UND-Verknüpfung und der dritten UND-Verknüpfung festgelegt wird.

18. Einrichtung nach einem der vorhergehenden Ansprüche, dadurch **gekennzeichnet**, daß die Zahl übereinstimmender nicht negierter Binärwerte und negierter Binärwerte je Taktimpuls (TSI) festgestellt wird, daß die Anzahl der Taktimpulse ermittelt wird, für die die Zahl gleich bleibt, und daß die Abtastphase (APH) abhängig von dieser Anzahl festgelegt wird.

19. Einrichtung nach Anspruch 18, dadurch **gekennzeichnet**, daß die Abtastphase (APH) so festgelegt ist, daß sie im wesentlichen mit dem Taktimpuls übereinstimmt, der durch die halbe Zahl definiert ist.

FIG.7

- 0101-Folge:
  $a2 = \underline{1.4} \ \& \ 2.4 \ \& \ \underline{3.4} \ \& \ 4.4$
  $a1 = \underline{1.3} \ \& \ \underline{1.5} \ \& \ 2.3 \ \& \ 2.5 \ \& \ \underline{3.3} \ \& \ \underline{3.5} \ \& \ 4.3 \ \& \ 4.5$
  $a0 = \underline{1.2} \ \& \ \underline{1.6} \ \& \ 2.2 \ \& \ 2.6 \ \& \ \underline{3.2} \ \& \ \underline{3.6} \ \& \ 4.2 \ \& \ 4.6$

- 1010-Folge:
  $b2 = 1.4 \ \& \ \underline{2.4} \ \& \ 3.4 \ \& \ \underline{4.4}$
  $b1 = 1.3 \ \& \ 1.5 \ \& \ \underline{2.3} \ \& \ \underline{2.5} \ \& \ 3.3 \ \& \ 3.5 \ \& \ \underline{4.3} \ \& \ \underline{4.5}$
  $b0 = 1.2 \ \& \ 1.6 \ \& \ \underline{2.2} \ \& \ \underline{2.6} \ \& \ 3.2 \ \& \ 3.6 \ \& \ \underline{4.2} \ \& \ \underline{4.6}$

- Kombination beider Fälle:
  $c2 = a2 \ \lor \ b2$
  $c1 = a1 \ \lor \ b1$
  $c0 = a0 \ \lor \ b0$

FIG.8

FIG.9

FIG.11

FIG.10